# EUROPEAN PATENT APPLICATION

(11) **EP 4 726 526 A1**
(43) Date of publication of application: **15.04.2026**
(21) Application number: 25172304.5
(22) Date of filing: 24.04.2025
(51) Int. Cl.: G06F 3/12

(54) **INSPECTION SYSTEM, PROGRAM, AND INSPECTION METHOD**

(30) Priority: 10.10.2024 JP 2024177602
(71) Applicant: FUJIFILM Business Innovation Corp., Minato-ku Tokyo (JP)
(72) Inventor: KIKUMOTO, Takashi, Yokohama-shi, Kanagawa (JP); OHIRA, Yoshie, Yokohama-shi, Kanagawa (JP); ISHIKAWA, Shogo, Yokohama-shi, Kanagawa (JP)
(74) Representative: Becker Kurig & Partner Patentanwälte mbB

(57) **Abstract**

An inspection system includes: a processor, in which the processor is configured to extract, from print data that is used for printing a printed material and that has a variable part of which a content differs for each print unit, variable data representing the content of the variable part, and perform inspection related to printing of the print data using the variable data.

## Description

### BACKGROUND OF THE INVENTION

### (i) Field of the Invention

The present invention relates to an inspection system, a program, and an inspection method.

### (ii) Description of Related Art

JP2023-159012A discloses an inspection device that inspects a printed material. In the inspection device, settings are made regarding collation inspection data for collating data formed on the printed material, and collation inspection data for a plurality of locations of the printed material is generated in accordance with the setting contents. Then, the inspection of the printed material is performed by comparing the data read from the printed material to be inspected with the generated corresponding collation inspection data.

### SUMMARY OF THE INVENTION

An inspection device or the like that inspects print data for printing a printed material, the print data having a variable part of which contents differ for each print unit. In such an inspection device, a user may input correct data indicating the contents of the variable part, and the print data may be compared with this correct data to inspect the print data.

An object of the present disclosure is to facilitate inspection compared to a case where inspection related to printing of print data is performed without using variable data that represents contents of a variable part extracted from the print data.

According to a first aspect of the present disclosure, there is provided an inspection system including:
a processor,
in which the processor is configured to:
   extract, from print data that is used for printing a printed material and that has a variable part of which a content differs for each print unit, variable data representing the content of the variable part; and
   perform inspection related to printing of the print data using the variable data.

According to a second aspect of the present disclosure, there is provided the inspection system according to the first aspect, in which the processor may be configured to:
perform the inspection by comparing read data obtained by reading the printed material printed by using the print data with the variable data extracted from the print data.

According to a third aspect of the present disclosure, there is provided the inspection system according to the first aspect, in which the processor may be configured to:
acquire reference data as a reference for the inspection; and
perform the inspection by comparing the variable data extracted from the print data with the reference data before printing of the printed material using the print data.

According to a fourth aspect of the present disclosure, there is provided the inspection system according to the third aspect,
in which the reference data may include information indicating an order in which the content of the variable part is arranged, and
the processor may be configured to:
   inspect the order in which the content of the variable part is arranged in the print data by comparing the variable data with the reference data.

According to a fifth aspect of the present disclosure, there is provided the inspection system according to any one of the first to fourth aspects, in which the processor may be configured to:
extract the variable data by a different method depending on a data format of the print data.

According to a sixth aspect of the present disclosure, there is provided the inspection system according to the fifth aspect, in which the processor may be configured to:
extract, as the variable data, an element designated by a user from among elements constituting the print data in a case where the print data is structured data or the print data is text data.

According to a seventh aspect of the present disclosure, there is provided the inspection system according to the sixth aspect, in which the processor may be configured to:
receive designation of the element by the user for one print unit in the print data; and
extract an element corresponding to the element designated by the user for another print unit as the variable data for the other print unit.

According to an eighth aspect of the present disclosure, there is provided the inspection system according to the fifth aspect, in which the processor may be configured to:
extract, in a case where a drawing method used for printing the print data is assigned to an element constituting the print data, the element to which a drawing method designated by a user is assigned, as the variable data.

According to a ninth aspect of the present disclosure, there is provided a program causing a computer to implement:
a function of extracting, from print data for printing a printed material, the print data having a variable part of which a content differs for each print unit, variable data representing the content of the variable part; and
a function of performing inspection related to printing of the print data using the variable data.

According to a tenth aspect of the present disclosure, there is provided an inspection method including:
extracting, from print data for printing a printed material, the print data having a variable part of which a content differs for each print unit, variable data representing the content of the variable part; and
performing inspection related to printing of the print data using the variable data.

According to the first aspect of the present disclosure, it is possible to perform the inspection more easily compared to a case where the inspection related to printing of the print data is performed without using the variable data representing the content of the variable part extracted from the print data.

According to the second aspect of the present disclosure, it is possible to inspect the printed material more easily compared to a case where the printed material is inspected by using data input separately from the variable data.

According to the third aspect of the present disclosure, it is possible to inspect the content of the variable part printed on the printed material before the printing of the printed material.

According to the fourth aspect of the present disclosure, it is possible to suppress the printing of the printed material in a state where the order in which the content of the variable part is arranged is incorrect, compared to a case where the inspection using the variable data is not performed before the printing of the printed material.

According to the fifth aspect of the present disclosure, it is possible to extract the variable data even in a case where the data format of the print data is different.

According to the sixth aspect of the present disclosure, the user can designate the element to be extracted as the variable data.

According to the seventh aspect of the present disclosure, it is possible to extract the element of the other print unit as the variable data even in a case where the user does not designate the element for the other print unit.

According to the eighth aspect of the present disclosure, even in a case where the user does not designate the element, the element to which the drawing method is assigned can be extracted as variable data.

According to the ninth aspect of the present disclosure, it is possible to perform the inspection more easily compared to a case where the inspection related to printing of the print data is performed without using the variable data representing the content of the variable part extracted from the print data.

According to the tenth aspect of the present disclosure, it is possible to perform the inspection more easily compared to a case where the inspection related to printing of the print data is performed without using the variable data representing the content of the variable part extracted from the print data.

### BRIEF DESCRIPTION OF THE DRAWINGS

Exemplary embodiment(s) of the present invention will be described in detail based on the following figures, wherein:
Fig. 1 is a diagram illustrating a configuration of a printing system to which an exemplary embodiment is applied;
Fig. 2 is a functional block diagram of a server device to which the present exemplary embodiment is applied;
Fig. 3 is a diagram for describing an example of print data received by a print instruction reception unit;
Fig. 4 is a diagram for describing an example of a printed material printed based on the print data;
Fig. 5 is a diagram illustrating an example of functional blocks of a printing apparatus;
Fig. 6 is a diagram illustrating an example of a setting screen for setting an inspection region, which is one of UI screens displayed by a display control unit;
Fig. 7 is a flowchart illustrating a procedure of processing of generating inspection data performed by an inspection data generation unit to which the present exemplary embodiment is applied;
Fig. 8 is a diagram illustrating an example of the inspection data generated by the inspection data generation unit;
Fig. 9 is a diagram illustrating an example of a designation screen for designating an element to be extracted by the inspection data generation unit, which is one of the UI screens displayed by the display control unit;
Fig. 10 is a diagram illustrating an example of a designation screen for designating an element to be extracted by the inspection data generation unit, which is one of the UI screens displayed by the display control unit;
Fig. 11 is a diagram illustrating an example of a designation screen for designating an element to be extracted by the inspection data generation unit, which is one of the UI screens displayed by the display control unit;
Fig. 12 is a functional block diagram of the server device to which Exemplary Embodiment 2 is applied; and
Fig. 13 is a diagram illustrating pre-inspection performed by a pre-inspection unit of the server device.

### DETAILED DESCRIPTION OF THE INVENTION

Hereinafter, exemplary embodiments of the present invention will be described with reference to the accompanying drawings.

### [Exemplary Embodiment 1]

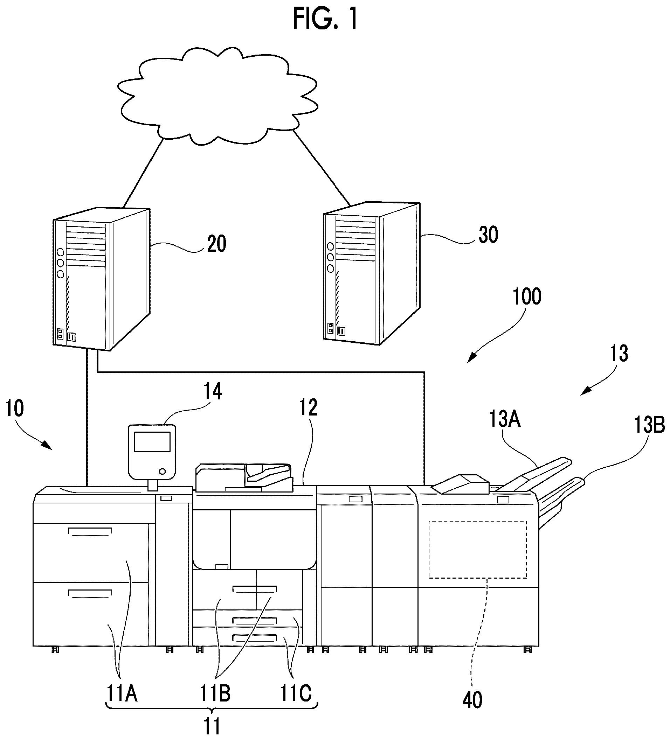

Fig. 1 is a diagram illustrating a configuration of a printing system 100 to which the present exemplary embodiment is applied.

The printing system 1 shown in Fig. 1 is configured to include a printing apparatus 10 that prints a printed material. The printing apparatus 10 and server devices 20 and 30 are connected to each other to be capable of communicating with each other. The printing system 100 is an example of an inspection system.

For example, a local area network (LAN) or the Internet is used as a network connecting the printing apparatus 10 and the server devices 20 and 30. However, the network may be a combination of the LAN and the Internet.

The printing apparatus 10 prints an image on paper, which is an example of a recording medium, based on an acquired print instruction. The print instruction referred to here is an instruction to perform printing, and may include information on the image to be printed or the like. In the present exemplary embodiment, the printing apparatus 10 may acquire a print instruction to perform so-called variable printing, in which a printed material having different printing contents for each print unit is printed, as the print instruction.

The printing apparatus 10 is, for example, a so-called production printer used for printing for commercial printing, and has a function of being capable of performing high-speed printing processing with high image quality. In addition, the printing apparatus 10 has a function of inspecting a printing result of the printed material.

Further, the printing apparatus 10 may have a function of being capable of performing post-processing according to a print instruction. The post-processing referred to here includes, for example, processing of binding a bundle of sheets, processing of folding sheets, processing of cutting sheets, processing of bookbinding, and the like.

The printing apparatus 10 is not limited to the production printer, and may be applied to a general printer (a printer for business use, a printer for home use, or the like).

The printing apparatus 10 includes a paper feed unit 11 that feeds paper to be printed, and a printing unit 12 that prints on the paper fed from the paper feed unit 11. In addition, the printing apparatus 10 includes a discharge device 13 that discharges a printed material that is printed paper, and an operation display unit 14 for a user or an operator.

The paper feed unit 11 is configured to include a plurality of paper feed trays 11A, 11B, and 11C that feed sheets of paper. The respective paper feed trays 11A to 11C can feed sheets of paper having different sizes or the same size.

The printing unit 12 prints an image on paper by, for example, an electrophotographic method in which toner attached to a charged and exposed photoreceptor is transferred onto paper and the image is fixed and formed. Further, the printing unit 12 may print an image on paper by an inkjet method in which ink is ejected onto paper to form an image.

In the present exemplary embodiment, the discharge device 13 is configured to include discharge trays 13A and 13B from which the printed material is sorted and discharged.

Further, the discharge device 13 is provided with an inspection device 40 that performs an inspection for verifying printing results of a printed material. The inspection device 40 inspects the printed material by comparing inspection data created from the print data by the server device 20 with scan data of the printed material printed based on the print data. The discharge device 13 discharges the printed material from any of the discharge trays 13A and 13B according to an inspection result of the inspection device 40.

The operation display unit 14 includes a display unit that displays various images for the operation and various types of information to be notified to the user. In addition, the operation display unit 14 includes an input unit in which various buttons to be input in accordance with the operation image of the display unit are arranged. The operation display unit 14 may have a display screen formed of, for example, a touch panel and the touch panel may have functions of a display unit and an input unit.

In addition to the function of printing an image on paper, the printing apparatus 10 according to the present exemplary embodiment includes a scanning function of optically reading an image of an original document or a printed material.

The functions described for the printing apparatus 10 are merely examples, and the printing apparatus 10 may include other functions.

The server devices 20 and 30 may be physically one computer, or may be implemented by distributed processing using a plurality of computers. Further, although the server devices 20 and 30 are configured as shared servers that provide a so-called cloud service in the present exemplary embodiment, the server devices 20 and 30 may be on-premises type servers.

For example, in a case where the server device 20 receives a print instruction from the server device 30, the server device 20 generates image data representing an image to be printed on paper by using print data included in the print instruction. The server device 20 outputs the generated image data to the printing apparatus 10.

Further, the server device 20 creates inspection data to be used for the inspection by the inspection device 40 from the print data. The server device 20 transfers the inspection data to the printing apparatus 10.

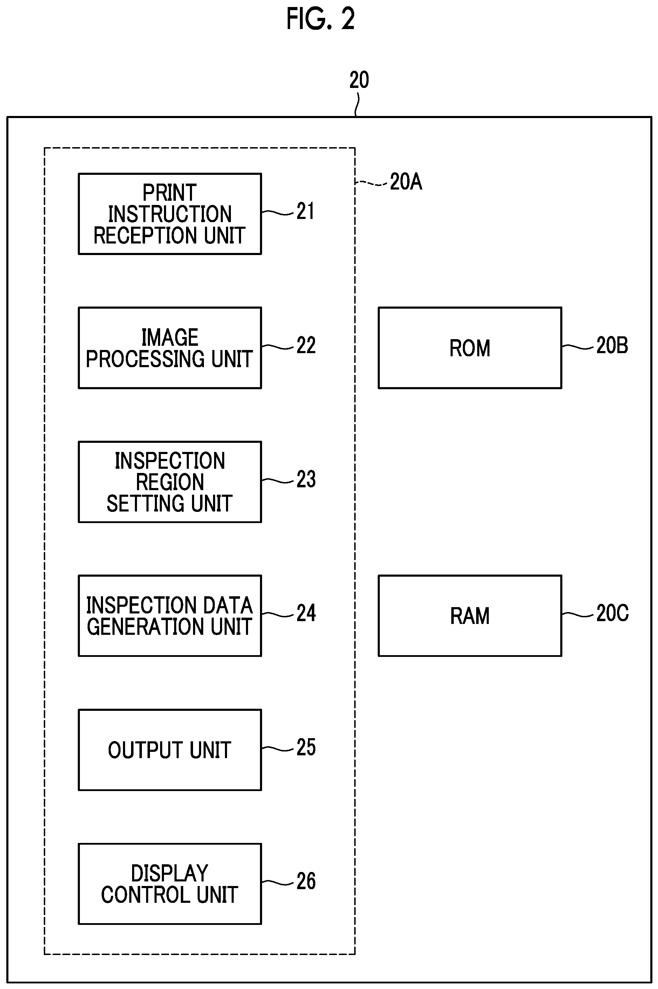

Fig. 2 is a functional block diagram of the server device 20 to which the present exemplary embodiment is applied.

As shown in Fig. 2, the server device 20 is configured to include a print instruction reception unit 21, an image processing unit 22, an inspection region setting unit 23, and an inspection data generation unit 24. Further, the server device 20 is configured to include an output unit 25 and a display control unit 26.

The print instruction reception unit 21 receives a print instruction transmitted from a user and manages the received print instruction. The print instruction received by the print instruction reception unit 21 includes print data for printing a printed material.

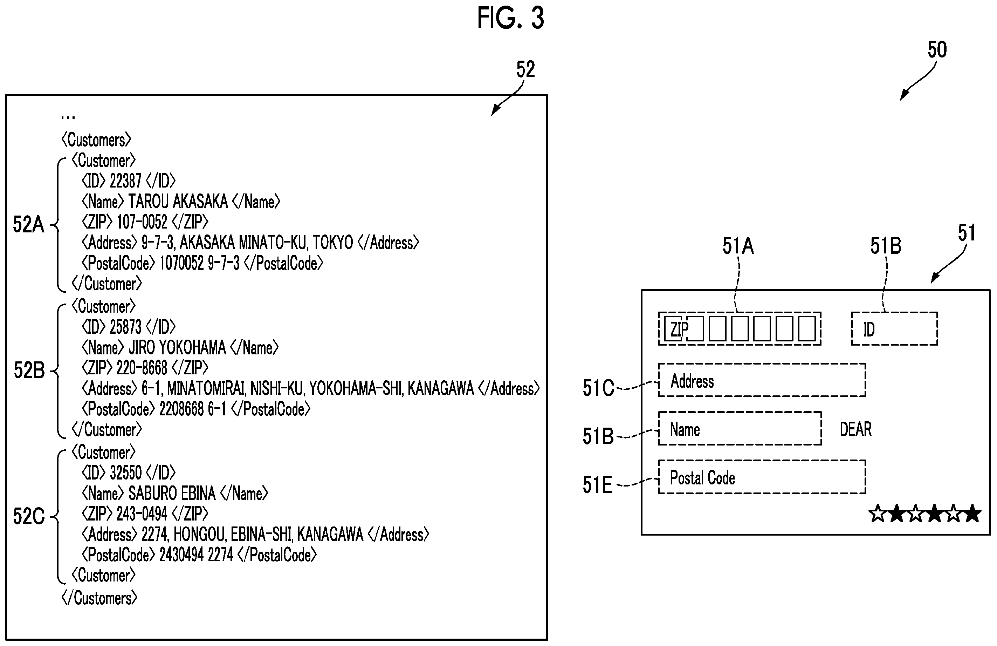

Fig. 3 is a diagram for describing an example of print data 50 received by the print instruction reception unit 21.

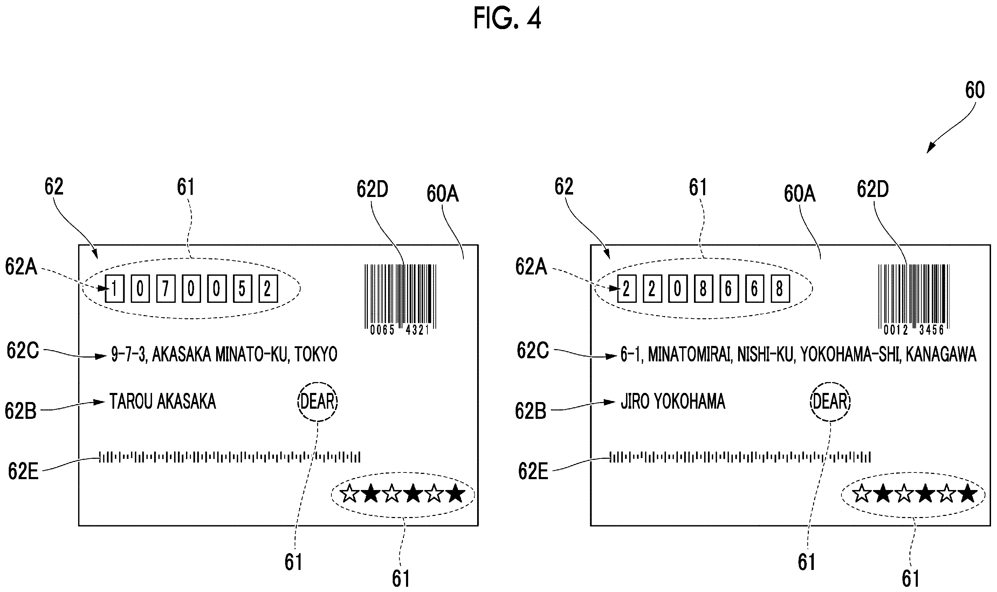

Fig. 4 is a diagram for describing an example of a printed material 60 printed based on the print data 50.

Figs. 3 and 4 illustrate the print data 50 and the printed material 60 in a case where the print instruction received by the print instruction reception unit 21 (see Fig. 2) is related to variable printing. More specifically, the print data 50 and the printed material 60 in a case of printing an address of a direct mail to be sent to a customer as variable printing are illustrated. In addition, Fig. 4 illustrates the printed material 60 for a first page and a second page out of three pages of the printed material 60 printed based on the print data 50.

As described above, in the variable printing, printed materials with different printed contents are printed for each print unit. The print unit is a processing unit of print data in a case where a series of variable printing operations is performed. For example, in a case of printing printed materials with different contents for each customer as variable printing, the print unit corresponds to print data for one customer. The printed material printed for each print unit may be one page or may span a plurality of pages. In the present exemplary embodiment, a case where the printed material printed for each print unit is one page will be described as an example.

As shown in Fig. 3, the print data 50 includes a fixed part 51 and a variable part 52.

In addition, as illustrated in Fig. 4, an image 60A including a fixed image 61 and a variable image 62 is formed on the printed material 60 on which the print data 50 is printed. The fixed image 61 is printed from the fixed part 51 of the print data 50. In addition, the variable image 62 is inserted into a predetermined region of the fixed image 61 and is printed from the contents of the variable part 52.

The fixed part 51 is data related to an image that is printed equally on a printed material regardless of the print unit. In the present exemplary embodiment, the fixed image 61 is printed on the printed material 60 based on the fixed part 51 of the print data 50.

The fixed part 51 is not particularly limited, and examples thereof include image data including an image that is a background of the variable image 62 printed based on the variable part 52, and a decorative image printed around the variable image 62.

The variable part 52 is data related to an image printed with different contents for each print unit on the printed material. In the present exemplary embodiment, the variable image 62 is printed on the printed material 60 based on the variable part 52 of the print data 50. Additionally, elements constituting each item of the variable part 52 are inserted into the fixed image 61 for each print unit and are printed on the printed material 60 as the variable image 62. The variable part 52 includes data of all print units included in the print instruction.

In this example, the variable part 52 is composed of data in an extensible markup language (XML) format. Additionally, in the variable part 52, each item and the elements constituting each item are associated with each other in the XML format.

In the variable part 52 illustrated in Fig. 3, a range surrounded by the tags <Customer> and </Customer> is data for one customer. In this example, the variable part 52 contains data for three customers. In Fig. 3, the data for each customer in the variable part 52 is indicated by reference numerals 52A, 52B, and 52C. As described above, in the present exemplary embodiment, data for one customer, which is an example of the print unit, corresponds to one page of the printed material 60. Therefore, in this example, the variable image 62 for the first page of the printed material 60 is printed based on the data 52A of the variable part 52. Similarly, the variable image 62 for the second page of the printed material 60 is printed based on the data 52B of the variable part 52, and the variable image 62 for the third page of the printed material 60 is printed based on the data 52C of the variable part 52.

The variable part 52 includes a customer number (ID), a name, a zip code, an address, and a postal code as items for identifying elements included in each print unit. The postal code is a code for classifying a delivery destination of mail, and is made up of a character string combining a zip code and an address display number.

In the variable part 52 illustrated in Fig. 3, a range surrounded by the tags <ID> and </ID> is an element corresponding to the customer number. In addition, a range surrounded by the tags <Name> and </Name> is an element corresponding to the name. In addition, a range surrounded by the tags <ZIP> and </ZIP> is an element corresponding to the zip code. In addition, a range surrounded by the tags <Address> and </Address> is an element corresponding to the address. In addition, a range surrounded by the tags <PostalCode> and </PostalCode> is an element corresponding to the postal code.

The variable image 62 printed based on the variable part 52 includes an image 62A representing the zip code, an image 62B representing the name, and an image 62C representing the address. In addition, the variable image 62 includes a barcode image 62D in which the customer number is barcoded and a barcode image 62E in which the postal code is barcoded.

The data format of the variable part 52 is not particularly limited. The variable part 52 can be exemplified as data structured in a data format such as an XML format, a portable document format (PDF), or a comma separated values (CSV) format. The structured data is data in which the items of the variable part 52 and the elements constituting each item are associated with each other.

In addition, the variable part 52 may be text data in which the elements constituting each item are represented by character strings.

Further, in the variable image 62 of the printed material 60, in a case where the elements constituting each item of the variable part 52 are drawn and printed in a predetermined aspect, the variable part 52 may be data in which the items of the variable part 52 and a drawing method assigned to each item are associated with each other. As an example of such data, the variable part 52 may be data in a PDF/variable and transactional (VT) format. In addition, as the drawing method assigned to each item, a font used in a case of printing the elements of each item of the variable part 52 can be exemplified. Examples of such a font include a barcode font that converts a character string into a barcode and draws the barcode.

In addition, the print data 50 includes layout information (not illustrated) regarding the arrangement of the variable image 62 in the image 60A printed on the printed material 60. Examples of the layout information include position information of the variable image 62 in the image 60A. Examples of the position information include information such as the coordinates and range (width and height) of the variable image 62 in the image 60A. In addition, examples of the layout information include drawing information regarding an aspect in which the elements constituting each item of the variable part 52 are drawn in the variable image 62. Examples of the drawing information include information such as a font type, a font size, and the number of characters, which are examples of the drawing method of drawing the elements of the variable part 52.

The layout information may be included in the fixed part 51, may be included in the variable part 52, or may be included in the print data 50 separately from the fixed part 51 and the variable part 52.

In this example, the fixed part 51 includes the position information of the variable image 62 in the image 60A. More specifically, the fixed part 51 includes position information 51A, 51B, 51C, 51D, and 51E indicating positions at which the images 62A, 62B, 62C, 62D, and 62E that are the variable image 62 are to be inserted in the image 60A.

Returning to Fig. 2, the image processing unit 22 generates print image data representing the image 60A to be printed on each page of the printed material 60, based on the print data 50 received by the print instruction reception unit 21.

The image processing unit 22 arranges the elements constituting each item of the variable part 52 in the fixed part 51 based on the print data 50, and then performs rasterization processing. As a result, the image processing unit 22 generates the print image data that is a rasterized image of the image 60A including the fixed image 61 and the variable image 62.

The inspection region setting unit 23 sets an inspection region, which is a region where the inspection device 40 inspects the printed material 60, in the print image data, and generates inspection region information. The inspection region information includes position information of the inspection region in the print image data.

In addition, the inspection region setting unit 23 may generate the inspection region information by associating additional information related to the inspection with each inspection region set in the print image data. Examples of the additional information related to the inspection include information such as the type of inspection to be performed in each inspection region, the accuracy of the inspection, and the name representing each inspection region.

The processing in which the inspection region setting unit 23 sets the inspection region and generates the inspection region information will be described in detail later.

The inspection data generation unit 24 generates the inspection data to be used for the inspection by the inspection device 40, based on the print data 50 received by the print instruction reception unit 21 and the inspection region information generated by the inspection region setting unit 23.

The inspection data generation unit 24 extracts elements constituting an item for which the inspection region is set in the variable part 52 from the print data 50, based on the inspection region information, and generates the inspection data. The inspection data is an example of variable data representing contents of the variable part 52. Examples of the inspection data include data in a CSV format in which the extracted elements are separated for each item. The inspection data is not limited to data in the CSV format.

The processing of generating the inspection data by the inspection data generation unit 24 and the generated inspection data will be described in detail later.

The output unit 25 outputs the print image data generated by the image processing unit 22 to the printing apparatus 10. In addition, the output unit 25 outputs the inspection region information generated by the inspection region setting unit 23 to the inspection device 40. In addition, the output unit 25 outputs the inspection data generated by the inspection data generation unit 24 to the inspection device 40.

The display control unit 26 controls display of a UI screen on the operation display unit 14. Although details will be described later, the display control unit 26 displays, as the UI screen, a setting screen for the user to set an inspection region where inspection is to be performed by the inspection device 40. In addition, the display control unit 26 displays, as the UI screen, a selection screen for selecting elements to be extracted as the inspection data to be used for the inspection by the inspection device 40 for the set inspection region.

Here, each function of the server device 20 is implemented by a CPU 20A as an example of a processor. The CPU 20A reads a program stored in a read only memory (ROM) 20B, and executes the program using a random access memory (RAM) 20C as a work area. The program executed by the CPU 20A may be provided to the server device 20 in a state of being stored in a computer-readable recording medium, such as a magnetic recording medium (a magnetic tape, a magnetic disk, or the like), an optical recording medium (an optical disk or the like), a magneto-optical recording medium, or a semiconductor memory. Further, the program executed by the CPU 20A may be downloaded to the server device 20 using a communication system such as the Internet.

Further, in the present exemplary embodiment, each function of the server device 20 is implemented by software, but the present invention is not limited thereto. For example, the server device 20 may be implemented by an application-specific integrated circuit (ASIC).

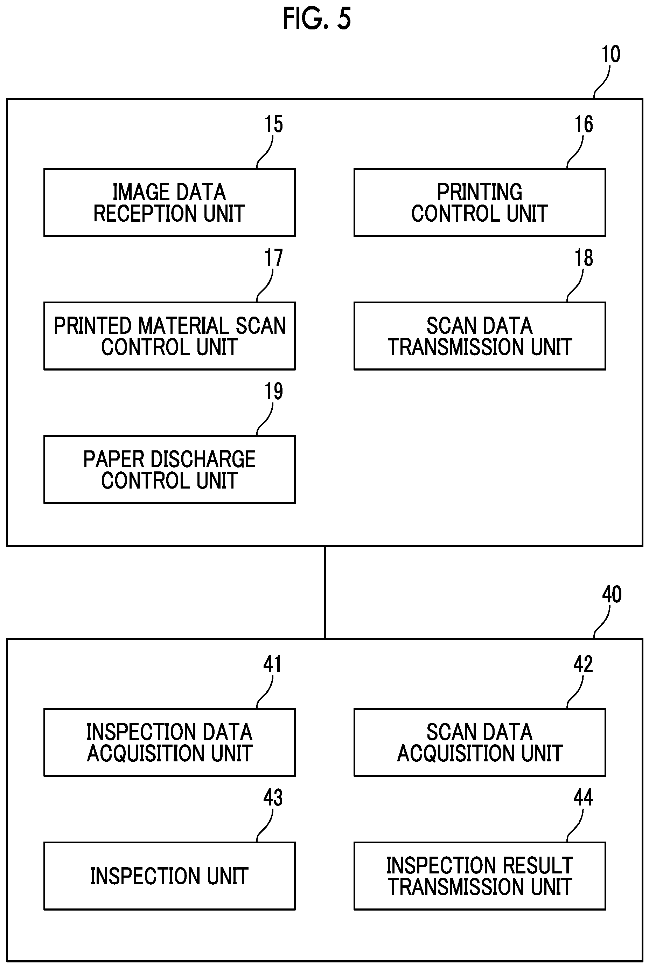

Fig. 5 is a diagram illustrating an example of functional blocks of the printing apparatus 10.

As shown in Fig. 5, the printing apparatus 10 includes an image data reception unit 15, a printing control unit 16, a printed material scan control unit 17, a scan data transmission unit 18, and a paper discharge control unit 19.

In addition, the inspection device 40 provided in the discharge device 13 (see Fig. 1) of the printing apparatus 10 inspects the printed material printed in response to the print instruction. The inspection device 40 includes an inspection data acquisition unit 41, a scan data acquisition unit 42, an inspection unit 43, and an inspection result transmission unit 44.

The image data reception unit 15 receives the print image data generated by the image processing unit 22 of the server device 20.

The printing control unit 16 controls the printing unit 12 (see Fig. 1). Additionally, the printing control unit 16 controls the printing unit 12 that performs printing of the printed material using the print image data received by the image data reception unit 15.

The printed material scan control unit 17 controls a scan function of optically reading an image of the printed material while the printed material printed by the printing unit 12 is being transported to the inspection device 40.

The scan data transmission unit 18 transmits the scan data acquired by the scan function to the inspection device 40.

The paper discharge control unit 19 sorts and discharges the printed material to either the discharge tray 13A or the discharge tray 13B according to an inspection result of the inspection device 40. Specifically, the paper discharge control unit 19 discharges a printed material, which has passed the inspection of the inspection device 40, from the discharge tray 13A and discharges a printed material, which has failed the inspection of the inspection device 40, from the discharge tray 13B.

The printing system 100 may cause the operation display unit 14 (see Fig. 1) to display the inspection result of the inspection device 40.

The inspection data acquisition unit 41 of the inspection device 40 acquires the inspection region information and the inspection data output from the output unit 25 (see Fig. 2) of the server device 20.

The inspection region information is generated by the inspection region setting unit 23 (see Fig. 2) of the server device 20. Further, the inspection data is generated by the inspection data generation unit 24 (see Fig. 2) of the server device 20.

The scan data acquisition unit 42 acquires scan data transmitted from the scan data transmission unit 18 of the printing apparatus 10. The scan data is data obtained by scanning the printed material 60 on which the print image data is printed.

The inspection unit 43 inspects the printed material 60 using the acquired inspection region information, the inspection data, and the scan data obtained by scanning the printed material 60. In the present exemplary embodiment, the inspection of the printed material 60 performed by the inspection unit 43 is an example of the inspection related to printing of the print data 50.

The inspection unit 43 of the present exemplary embodiment performs, as the inspection of the printed material 60, a collation inspection of checking whether or not the contents printed as the variable image 62 of the printed material 60 match the contents of the variable part 52 of the print data 50. Additionally, the inspection unit 43 performs the collation inspection of the printed material 60 by comparing the scan data of the printed material 60 with the inspection data. The type of inspection performed by the inspection unit 43 is not limited to the collation inspection as long as the inspection is performed by comparing the scan data with the inspection data.

The inspection by the inspection unit 43 will be described in detail later.

The inspection result transmission unit 44 transmits information indicating the result of the inspection by the inspection unit 43, that is, information on whether the inspection has passed or failed, to the printing apparatus 10. As described above, the paper discharge control unit 19 of the printing apparatus 10 sorts and discharges the inspected printed material 60 to either the discharge tray 13A or the discharge tray 13B based on the information indicating the inspection result.

In addition, the inspection result transmission unit 44 transmits the inspection result and information for specifying the item of the inspected printed material 60 to the printing apparatus 10. Accordingly, the inspection result of the printed material 60 can be displayed on the operation display unit 14 (see Fig. 1). Further, the inspection result transmission unit 44 may transmit the inspection result to the server device 30 (see Fig. 1) to notify the user at a position away from the printing apparatus 10 of the inspection result.

The above-described functions of the printing apparatus 10 and the inspection device 40 are implemented by a CPU as an example of a processor. The CPU reads a program stored in a ROM and executes the program using a RAM as a work area. The program executed by the CPU may be provided to the printing apparatus 10 and the inspection device 40 in a state of being stored in a computer-readable recording medium, such as a magnetic recording medium, an optical recording medium, a magneto-optical recording medium, or a semiconductor memory. Further, the program executed by the CPU may be downloaded to the printing apparatus 10 and the inspection device 40 using a communication system such as the Internet.

In the printing system 100 according to the present exemplary embodiment, the server device 20 is connected to an upstream side of the printing apparatus 10, but the present exemplary embodiment is not limited thereto. In the printing system 100, the printing apparatus 10 may have each function of the server device 20 (see Fig. 2).

Next, the processing in which the inspection region setting unit 23 sets the inspection region and generates the inspection region information will be described. As described above, the inspection region setting unit 23 of the present exemplary embodiment sets the inspection region based on the operation of the user on the UI screen displayed on the operation display unit 14 by the display control unit 26.

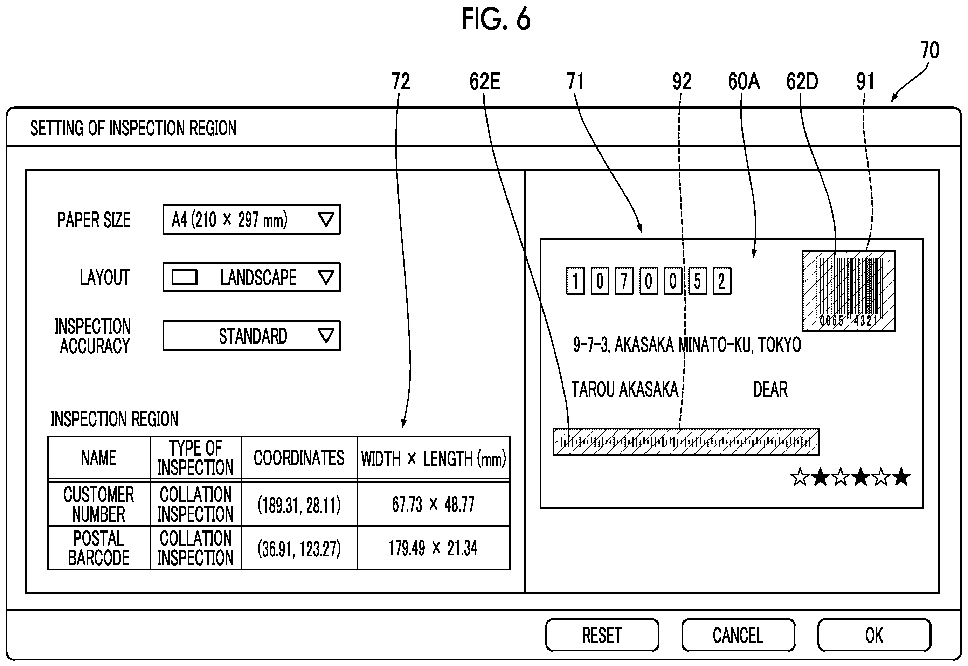

Fig. 6 is a diagram illustrating an example of a setting screen 70 for setting the inspection region, which is one of the UI screens displayed by the display control unit 26.

The setting screen 70 includes an image display section 71 that displays the image 60A (see Fig. 4) to be printed on the printed material 60 (see Fig. 4) based on the print image data generated by the image processing unit 22 (see Fig. 2).

In this example, in a case where the print image data spans a plurality of pages, the image display section 71 displays the image 60A based on the print image data on one page at a time. In other words, in a case where the variable part 52 (see Fig. 3) of the print data 50 (see Fig. 3) contains data for a plurality of customers, the image 60A based on the print image data generated based on the data for one customer of the variable part 52 is displayed on the image display section 71.

The inspection region setting unit 23 sets the inspection region in response to the operation of the user on the image 60A displayed on the image display section 71. In Fig. 6, a range selected by the operation of the user on the image 60A, that is, a range set as the inspection region, is hatched.

The user selects a portion of the image 60A displayed on the image display section 71 that is to be inspected by the inspection device 40. In the example shown in Fig. 6, the barcode image 62D and the barcode image 62E are selected as the portions to be inspected by the inspection device 40. The inspection region setting unit 23 sets a region in which the barcode image 62D and the barcode image 62E selected by the user are formed, as the inspection region. Hereinafter, the inspection region set in the region in which the barcode image 62D is formed is referred to as a first inspection region 91. Similarly, the inspection region set in the region in which the barcode image 62E is formed is referred to as a second inspection region 92.

The inspection region setting unit 23 acquires position information of the first inspection region 91 and the second inspection region 92. Examples of the position information of the first inspection region 91 and the second inspection region 92 may include information such as the coordinates, width, and length of the first inspection region 91 and the second inspection region 92 in the printed material on which the image 60A is printed.

The setting screen 70 includes an inspection region display section 72 that displays information related to the inspection region. In this example, the inspection region display section 72 displays the coordinates, width, and length of the first inspection region 91 and the second inspection region 92.

In addition, the inspection region display section 72 displays information regarding the type of inspection performed in the inspection region as additional information related to the inspection. In this example, the inspection region display section 72 displays "collation inspection" as the type of inspection performed in the first inspection region 91 and the second inspection region 92.

In addition, the name of the inspection region is displayed on the inspection region display section 72 as the additional information related to the inspection. In this example, the inspection region display section 72 displays "customer number" as the name of the first inspection region 91 set in the barcode image 62D. In addition, the inspection region display section 72 displays "postal barcode" as the name of the second inspection region 92 set in the barcode image 62E.

The setting screen 70 may be configured to designate or change additional information related to the inspection in response to an operation of the user on the inspection region display section 72.

In this case, the inspection region setting unit 23 acquires the additional information set for each inspection region in response to the operation on the inspection region display section 72. In this example, the inspection region setting unit 23 acquires, as the additional information, information regarding the type of inspection performed in each inspection region and the name representing each inspection region.

The inspection region setting unit 23 generates the inspection region information by associating the position information of each inspection region with the additional information of each inspection region.

Subsequently, processing in which the inspection data generation unit 24 generates the inspection data will be described.

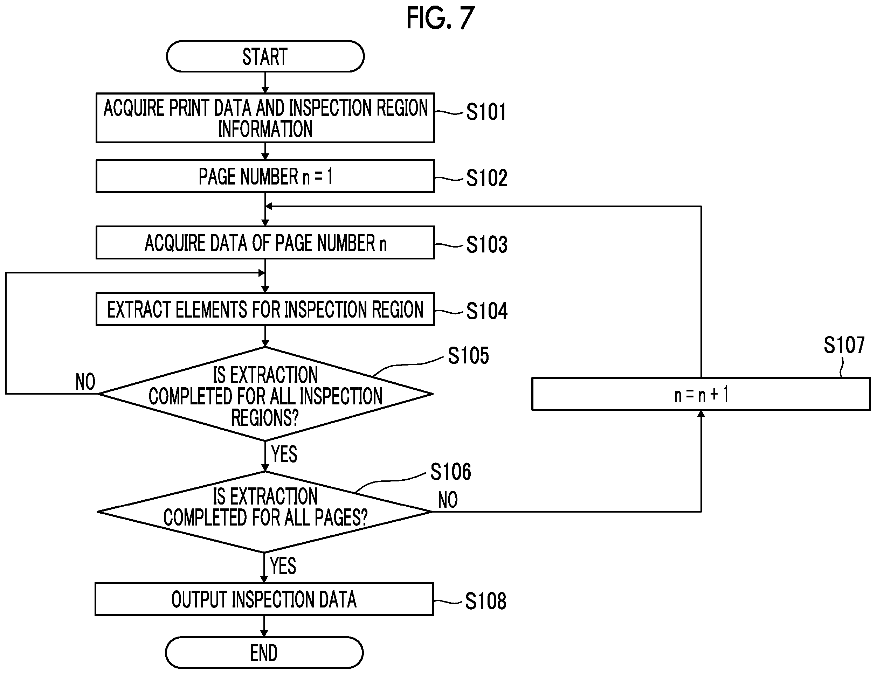

Fig. 7 is a flowchart illustrating a procedure of the processing of generating the inspection data performed by the inspection data generation unit 24 to which the present exemplary embodiment is applied.

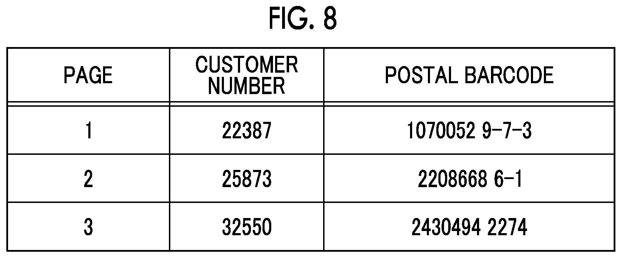

Fig. 8 is a diagram illustrating an example of the inspection data generated by the inspection data generation unit 24.

The inspection data generation unit 24 of the present exemplary embodiment extracts elements constituting an item for which the inspection region is set in the variable part 52 from the print data 50, and generates the inspection data.

First, the inspection data generation unit 24 acquires the print data 50 received by the print instruction reception unit 21 and the inspection region information generated by the inspection region setting unit 23 (step S101).

In this example, as described above, the variable part 52 of the print data 50 includes a customer number, a name, a zip code, an address, and a postal code as items for identifying data included in each print unit.

In the inspection region information, the first inspection region 91 is set in a region of the image 60A in which the barcode image 62D corresponding to the customer number, which is one of the items of the variable part 52, is formed. In the inspection region information, the second inspection region 92 is set in a region of the image 60A in which the barcode image 62E corresponding to the postal code, which is one of the items of the variable part 52, is formed. The name given to the first inspection region 91 is "customer number", and the name given to the second inspection region 92 is "postal barcode".

Next, the inspection data generation unit 24 sets a page number n of the inspection data to 1 (n = 1) (step S102).

Next, the inspection data generation unit 24 acquires data of the variable part 52 corresponding to the page number n from the print data 50 acquired in step S101 (step S103). In this example, the inspection data generation unit 24 acquires the data 52A of the first page in the variable part 52 of the print data 50.

Next, the inspection data generation unit 24 extracts elements belonging to an item for which the inspection region is set from the data of the variable part 52 acquired in step S103, based on the inspection region information acquired in step S101 (step S104).

In this example, the inspection data generation unit 24 extracts an element of the customer number, which is the item of the first inspection region 91, from the data 52A of the first page of the variable part 52. Additionally, the inspection data generation unit 24 extracts a character string "22387" surrounded by the tags <ID> and </ID> in the data 52A as the element of the customer number, which is the item of the first inspection region 91.

In step S104, the inspection data generation unit 24 extracts the elements belonging to the item for which the inspection region is set, using a different method depending on the data format of the variable part 52 of the print data 50. Additionally, the inspection data generation unit 24 determines the elements to be extracted by a different method depending on the data format of the variable part 52. Processing in which the inspection data generation unit 24 determines the elements to be extracted depending on the data format of the variable part 52 will be described in detail later.

Next, the inspection data generation unit 24 determines whether or not the extraction of elements is completed for all the inspection regions set by the inspection region setting unit 23 (step S105).

In a case where the extraction of the elements is not completed for all the inspection regions (NO in step S105), the inspection data generation unit 24 returns to step S104 and continues the processing.

In this example, the inspection data generation unit 24 extracts an element of the postal code, which is the item of the second inspection region 92, which is the remaining inspection region, from the data 52A of the first page of the variable part 52. Additionally, the inspection data generation unit 24 extracts a character string "1070052 9-7-3" surrounded by the tags <PostalCode> and </PostalCode> in the variable part 52 as the element of the postal code, which is the item of the second inspection region 92.

On the other hand, in a case where the extraction of elements is completed for all the inspection regions (YES in step S105), the inspection data generation unit 24 determines whether or not the extraction of the elements of the items for which the inspection regions are set is completed for all the pages included in the variable part 52 (step S106).

In a case where the extraction of the elements is not completed for all the pages (NO in step S106), the inspection data generation unit 24 updates the page number n to n + 1 (n = n + 1) (step S107). The inspection data generation unit 24 returns to step S103 and continues the processing.

In this example, the inspection data generation unit 24 extracts a character string "25873" as the element of the customer number, which is the item of the first inspection region 91, from the data 52B of the second page of the variable part 52, in the same manner as the data 52A. In addition, the inspection data generation unit 24 extracts a character string "22086686-1" as the element of the postal code, which is the item of the second inspection region 92, from the data 52B of the variable part 52.

Further, the inspection data generation unit 24 extracts a character string "32550" as the element of the customer number, which is the item of the first inspection region 91, from the data 52C of the third page of the variable part 52. In addition, the inspection data generation unit 24 extracts a character string "2430494 2274" as the element of the postal code, which is the item of the second inspection region 92, from the data 52C of the variable part 52.

In a case where the extraction of the elements is completed for all the pages (YES in step S106), the inspection data generation unit 24 generates the inspection data based on the elements extracted in step S104, and outputs the inspection data to the inspection device 40 via the output unit 25 (step S108).

As described above, the inspection data generation unit 24 ends the series of processing.

As illustrated in Fig. 8, the inspection data generated by the inspection data generation unit 24 of the present exemplary embodiment includes the elements extracted for the items for which the inspection regions are set, page numbers, and names representing each inspection region.

Additionally, in the inspection data illustrated in Fig. 8, as the name of each inspection region, the name "customer number" of the first inspection region 91 and the name "postal barcode" of the second inspection region 92 are included. The elements "22387", "25873", and "32550" extracted for the first inspection region 91 are arranged in the column of the customer numbers so as to correspond to the page numbers. In addition, the elements "1070052 9-7-3", "2208668 6-1", and "2430494 2274" extracted for the second inspection region 92 are arranged in the column of the postal barcodes so as to correspond to the page numbers.

As described above, the inspection data generation unit 24 determines the elements to be extracted in step S104 using different methods depending on the data format of the variable part 52. The inspection data generation unit 24 determines the elements to be extracted in step S104 based on the designation of the user via the UI screen displayed on the operation display unit 14 (see Fig. 1) by the display control unit 26 (see Fig. 2). Hereinafter, a method of determining the elements to be extracted by the inspection data generation unit 24 will be described for each data format of the variable part 52 (see Fig. 3).

First, a case where the variable part 52 is structured data in a format such as an XML format, a PDF format, or a CSV format will be described.

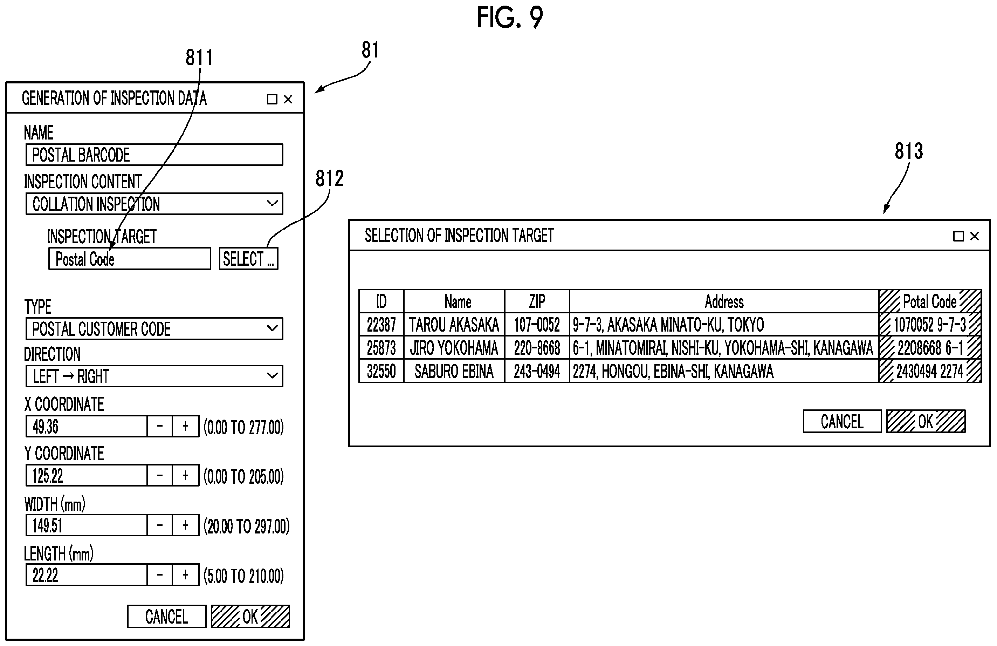

Fig. 9 is a diagram illustrating an example of a designation screen 81 for designating elements to be extracted by the inspection data generation unit 24, which is one of the UI screens displayed by the display control unit 26. Fig. 9 illustrates the designation screen 81 for designating elements to be extracted for the second inspection region 92.

The designation screen 81 includes an item display section 811 that displays an item to which the element to be extracted by the inspection data generation unit 24 belongs.

In addition, in a case where a selection button 812 is operated by the user on the designation screen 81, a selection section 813 for selecting an element to be extracted by the inspection data generation unit 24 is displayed.

In the selection section 813, the items of the variable part 52 of the print data 50 and the elements constituting each item are displayed in a table format. Specifically, in the first row of the table in the selection section 813, customer number (ID), name (Name), zip code (ZIP), address (Address), and postal code (Postal Code) are displayed as the items of the variable part 52. In the second to fourth tows of each column of the table in the selection section 813, the elements belonging to each item are displayed in order of page numbers.

The user designates an element to be extracted for the second inspection region 92 by selecting a column from the table displayed on the selection section 813. In this example, the user selects the column of the postal codes (Postal Code) and designates the elements "1070052 9-7-3", "2208668 6-1", and "2430494 2274" belonging to the postal code as the elements to be extracted for the second inspection region 92.

The inspection data generation unit 24 determines the elements "1070052 9-7-3", "2208668 6-1", and "2430494 2274" belonging to the postal code designated by the user by the operation on the selection section 813 as the elements to be extracted for the second inspection region 92.

In this case, in step S104 described above, the inspection data generation unit 24 extracts the character strings "1070052 9-7-3", "2208668 6-1", and "2430494 2274" as the elements of the postal code, which is the item of the second inspection region 92.

Subsequently, a case where the variable part 52 is text data will be described.

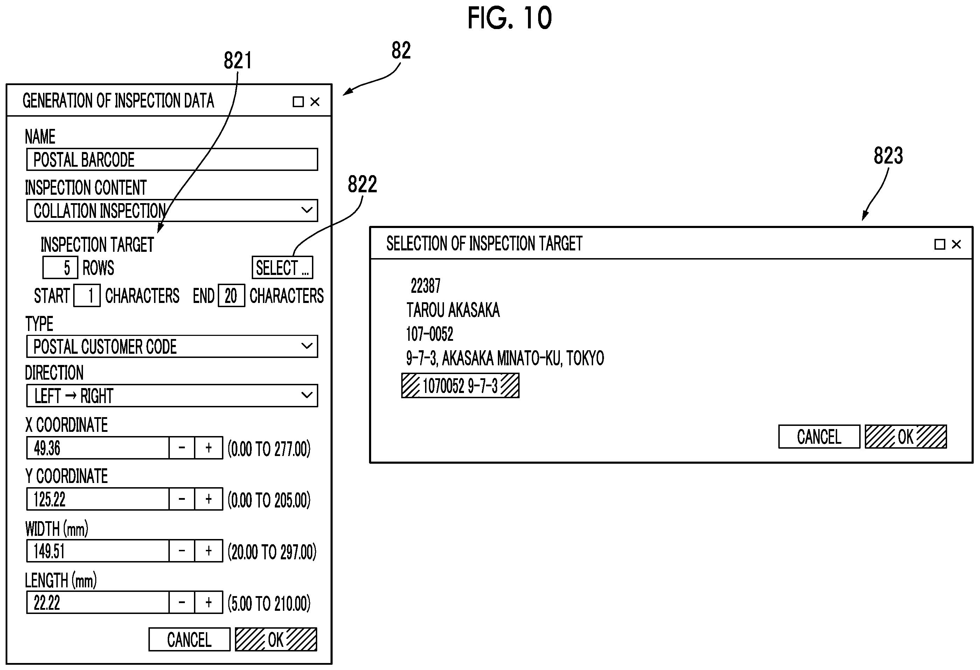

Fig. 10 is a diagram illustrating an example of a designation screen 82 for designating elements to be extracted by the inspection data generation unit 24, which is one of the UI screens displayed by the display control unit 26. Fig. 10 illustrates the designation screen 82 for designating elements to be extracted for the second inspection region 92.

The designation screen 82 includes a text display section 821 that indicates a position of the element designated by the user in the variable part 52.

In addition, in a case where the selection button 822 is operated by the user on the designation screen 82, a selection section 823 for selecting an element to be extracted by the inspection data generation unit 24 is displayed.

In the selection section 823, the element corresponding to the data 52A of the first page of the variable part 52 is displayed in a text format.

The user designates the element to be extracted for the second inspection region 92 by selecting a character string from the text displayed on the selection section 823. In this example, the user designates the character string "1070052 9-7-3" in the fifth row as the element to be extracted for the second inspection region 92.

In a case where the designation of the element by the user for the data for one page, which is an example of one print unit in the variable part 52, is received, the inspection data generation unit 24 determines the designated element as the element to be extracted by the inspection data generation unit 24 for all pages.

The inspection data generation unit 24 determines the character string "1070052 9-7-3" designated by the user through the operation on the selection section 823 as the element to be extracted for the second inspection region 92. Further, the inspection data generation unit 24 determine elements of other pages as the elements to be extracted for the second inspection region 92 for the postal code, which is the item to which the character string "1070052 9-7-3" belongs. In this example, the inspection data generation unit 24 determines the character strings "2208668 6-1" and "2430494 2274" belonging to the postal code in the data 52B and 52C as the elements to be extracted for the second inspection region 92.

In this case, in step S104 described above, the inspection data generation unit 24 extracts the character strings "1070052 9-7-3", "2208668 6-1", and "2430494 2274" as the elements of the postal code, which is the item of the second inspection region 92.

Subsequently, a case where the variable part 52 is data in which the item of the variable part 52 is associated with the drawing method assigned to each item will be described.

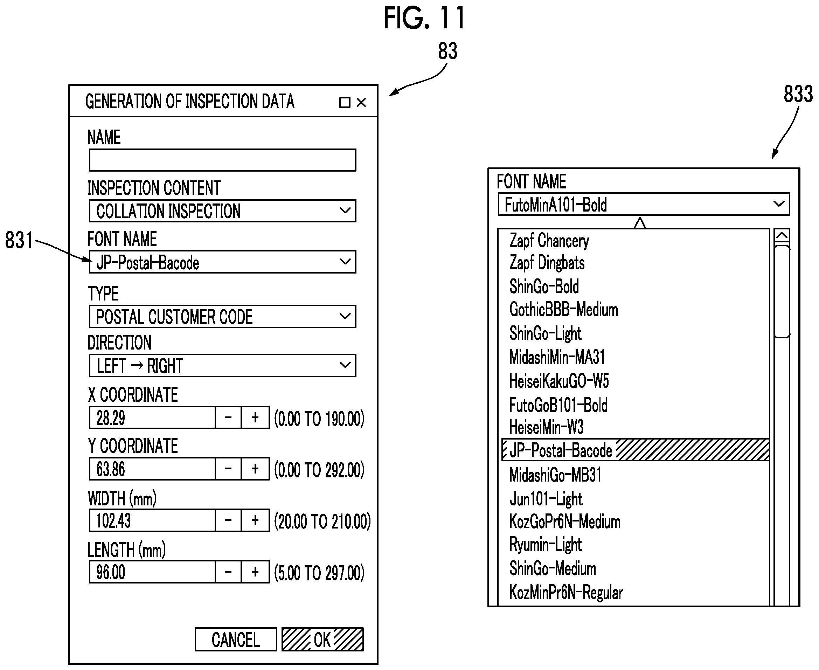

Fig. 11 is a diagram illustrating an example of a designation screen 83 for designating elements to be extracted by the inspection data generation unit 24, which is one of the UI screens displayed by the display control unit 26. Fig. 11 illustrates the designation screen 83 for designating elements to be extracted for the second inspection region 92.

The designation screen 83 includes a font display section 831 that displays a name of a font that is an example of a drawing method for drawing an item of the variable part 52.

On the designation screen 83, in a case where a tab of the font display section 831 is operated, a font selection section 833 for selecting a font for drawing the item of the variable part 52 from a list is displayed.

The user selects a font for drawing each item of the variable part 52 from the list of fonts displayed in the font selection section 833. In this example, the user selects "JP-Postal-Bacode", which is one of the fonts for drawing the postal code as a barcode, as the font for drawing the item of the second inspection region 92.

In a case where the drawing method is assigned to the elements constituting each item of the variable part 52 and the drawing method is designated by the user, the inspection data generation unit 24 determines the element belonging to the item to which the drawing method is assigned, as the element to be extracted. In addition, in a case where a predetermined drawing method is designated by the user, the inspection data generation unit 24 determines the element belonging to the item to which the drawing method is assigned, as the element to be extracted. Examples of the predetermined drawing method include a font that requires inspection by the inspection device 40 for an image printed by converting a character string.

In this example, the inspection data generation unit 24 determines the elements "1070052 9-7-3", "2208668 6-1", and "2430494 2274" belonging to the postal code in which "JP-Postal-Bacode" is selected as the font, as the elements to be extracted for the second inspection region 92.

In this case, in step S104 described above, the inspection data generation unit 24 extracts the character strings "1070052 9-7-3", "2208668 6-1", and "2430494 2274" as the elements of the postal code, which is the item of the second inspection region 92.

Subsequently, the inspection performed by the inspection device 40 of the present exemplary embodiment will be described.

The inspection device 40 inspects the printed material 60 using the inspection data generated by the inspection data generation unit 24 of the server device 20. In addition, the inspection device 40 uses the inspection data as the correct data indicating the contents of the variable part 52 of the print data 50 to inspect the printed material 60 printed based on the print data 50.

Specifically, in the inspection device 40, the inspection data acquisition unit 41 acquires the inspection region information and the inspection data from the server device 20. In addition, the scan data acquisition unit 42 acquires scan data obtained by scanning the printed material 60. Additionally, the scan data acquisition unit 42 acquires scan data obtained by scanning the image 60A printed on the printed material 60. In this example, the print data 50 includes data for three pages, and the printed material 60 for three pages is printed. Therefore, the scan data acquisition unit 42 acquires scan data for three pages. The scan data is an example of read data obtained by reading the printed material 60.

The inspection unit 43 decodes an image set in the inspection region in the image 60A of the scan data of each page, based on the inspection region information. In this example, the inspection unit 43 decodes the barcode image 62D set in the first inspection region 91 in the image 60A of the scan data of each page, and acquires a character string corresponding to the barcode image 62D. Similarly, the inspection unit 43 decodes the barcode image 62E set in the second inspection region 92 in the image 60A of the scan data of each page, and acquires a character string corresponding to the barcode image 62E.

Then, for each inspection region, the inspection unit 43 compares the character string acquired by decoding the scan data with the element extracted from the variable part 52 in the inspection data, and inspects the image set in the inspection region.

Specifically, the inspection unit 43 compares the character string obtained by decoding the barcode image 62D with the character string extracted from the inspection data as the element of the customer number, which is the item of the first inspection region 91. As a result, the inspection unit 43 inspects the barcode image 62D of the printed material 60.

Similarly, the inspection unit 43 compares the character string obtained by decoding the barcode image 62E with the character string extracted from the inspection data as the element of the postal code, which is the item of the second inspection region 92. As a result, the inspection unit 43 inspects the barcode image 62E of the printed material 60.

For example, in a case where a character string acquired by decoding the scan data matches the element extracted from the variable part 52 in the inspection data, the inspection unit 43 determines that the printed material 60 corresponding to the scan data has passed inspection. In addition, for example, in a case where a character string acquired by decoding the scan data does not match the element extracted from the variable part 52 in the inspection data, the inspection unit 43 determines that the printed material 60 corresponding to the scan data has failed inspection.

In a case of inspecting the printed material 60 printed based on the print data 50 including the variable part 52, the user may input the correct data indicating the elements constituting each item of the variable part 52 separately from the print data 50. In this case, the printed material 60 is inspected by comparing the character string and the like acquired by decoding the scan data with the correct data input by the user.

In such an aspect, for example, in a case where the order in which the elements are arranged in the correct data input by the user is different from the order in the variable part 52 of the print data 50, the inspection of the printed material 60 may not be accurately performed. Additionally, even in a case where the printed material 60 is printed correctly based on the print data 50, the character string or the like acquired by decoding the scan data of the printed material 60 may not match the element of the correct data, and the printed material 60 may be determined to have failed the inspection. In this case, in a case where the printed material 60 that has been determined to have failed the inspection is discarded, the paper or the like used for printing the printed material 60 may be wasted.

Contrary to this, in the present exemplary embodiment, the inspection data generated by extracting the elements constituting each item of the variable part 52 from the print data 50 is used as the correct data. Accordingly, the order in which the elements are arranged in the inspection data, which is the correct data, is equal to the order in the variable part 52 of the print data 50. As a result, in the printing system 1, the inspection of the printed material 60 can be performed more accurately than in a case where the inspection of the printed material 60 is performed using the correct data input by the user separately from the print data 50.

### [Exemplary Embodiment 2]

Subsequently, Exemplary Embodiment 2 of the present invention will be described. The same reference numerals are used for the same configurations as in Exemplary Embodiment 1, and detailed description thereof will be omitted.

In the printing system 1 of the first exemplary embodiment, the inspection device 40 inspects the printed material 60 printed based on the print data 50, using the inspection data generated by the inspection data generation unit 24 as the correct data.

Contrary to this, in the printing system 1 of Exemplary Embodiment 2, the server device 20 acquires reference data as a reference for inspecting the printed material 60 using the print data 50. The server device 20 performs pre-inspection by comparing the inspection data generated by the inspection data generation unit 24 with the reference data before the printing of the printed material 60 by the printing apparatus 10.

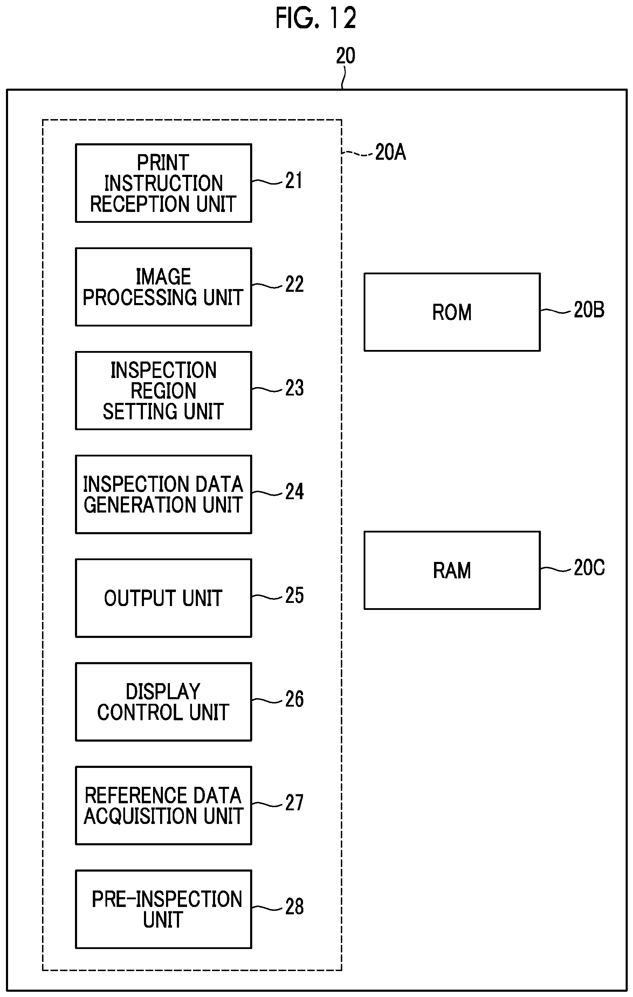

Fig. 12 is a functional block diagram of the server device 20 to which Exemplary Embodiment 2 is applied.

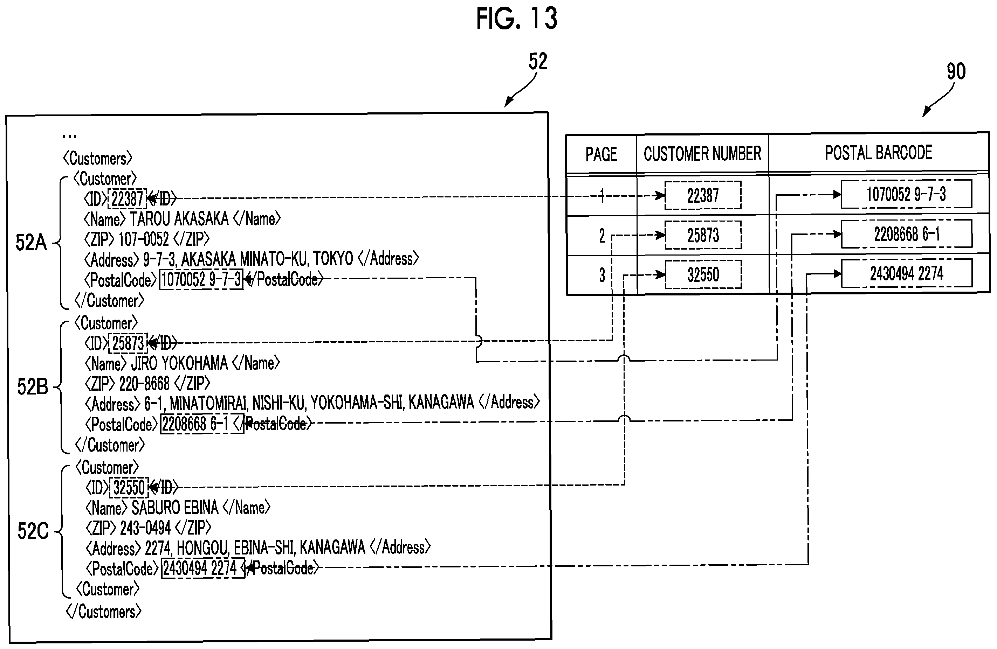

Fig. 13 is a diagram illustrating pre-inspection performed by a pre-inspection unit 28 of the server device 20. Fig. 13 illustrates the variable part 52 of the print data 50 and reference data 90 acquired by a reference data acquisition unit 27 and used for the inspection by the pre-inspection unit 28.

As illustrated in Fig. 12, the server device 20 is configured to include the print instruction reception unit 21, the image processing unit 22, the inspection region setting unit 23, and the inspection data generation unit 24. In addition, the server device 20 is configured to include the output unit 25 and the display control unit 26. Further, the server device 20 is configured to include the reference data acquisition unit 27 and the pre-inspection unit 28.

The reference data acquisition unit 27 acquires the reference data 90 transmitted from the user. The reference data 90 is data created by the user or the like separately from the print data 50, and is data indicating elements constituting each item for which the inspection region is set in the variable part 52 of the print data 50. Examples of the reference data 90 include data in a CSV format and data in an XML format.

In this example, in the reference data 90, elements constituting each item for which the inspection region is set are associated with the name of the inspection region. More specifically, as illustrated in Fig. 13, in the reference data 90, the elements of the customer number, which is the item for which the first inspection region 91 is set, are associated with the name "customer number" of the first inspection region 91. In addition, in the reference data 90, the elements of the postal code, which is the item for which the second inspection region 92 is set, are associated with the name "postal barcode" of the second inspection region 92.

In the reference data 90, the elements of the customer number, which is the item for which the first inspection region 91 is set, are arranged in association with the page numbers. Similarly, in the reference data 90, the elements of the postal code, which is the item for which the second inspection region 92 is set, are arranged in association with the page numbers. Additionally, the reference data 90 includes information indicating the order in which the elements constituting each item for which the inspection region is set in the variable part 52 are arranged.

The pre-inspection unit 28 performs pre-inspection by comparing the inspection data generated by extracting the elements constituting the item for which the inspection region is set in the variable part 52 of the print data 50 by the inspection data generation unit 24 with the reference data 90. Additionally, the pre-inspection unit 28 performs the pre-inspection by comparing the inspection data with the reference data 90 before the printing apparatus 10 prints the printed material 60 based on the print data 50. In the present exemplary embodiment, the pre-inspection performed by the pre-inspection unit 28 is an example of inspection related to printing of the print data 50.

Here, the extraction of the elements constituting the items for which the inspection region is set by the inspection data generation unit 24 and the generation of the inspection data are performed in the same manner as in Exemplary Embodiment 1.

That is, the inspection data generation unit 24 extracts the elements belonging to the items set in the first inspection region 91 and the second inspection region 92 in the variable part 52. Specifically, the inspection data generation unit 24 extracts the character strings "22387", "25873", and "32550", which are elements of the customer number (ID) that is the item set in the first inspection region 91, from the variable part 52. In addition, the inspection data generation unit 24 extracts the character strings "1070052 9-7-3", "2208668 6-1", and "2430494 2274", which are elements of the postal code that is the item set in the second inspection region 92, from the variable part 52.

As illustrated in Fig. 13, the pre-inspection unit 28 compares the elements extracted from the variable part 52 as the inspection data with the elements of the reference data 90 for each page of the variable part 52.

Specifically, the pre-inspection unit 28 compares the elements extracted from the data 52A of the first page of the variable part 52 with the elements of the first page of the reference data 90. Similarly, the pre-inspection unit 28 compares the elements extracted from the data 52B of the second page of the variable part 52 with the elements of the second page of the reference data 90. In addition, the pre-inspection unit 28 compares the elements extracted from the data 52C of the third page of the variable part 52 with the elements of the third page of the reference data 90.

The pre-inspection unit 28 determines that the inspection has passed in a case where the elements extracted from the variable part 52 as the inspection data match the elements of the reference data 90. In addition, the pre-inspection unit 28 determines that the inspection has failed in a case where the elements extracted from the variable part 52 as the inspection data do not match the elements of the reference data 90.

The pre-inspection unit 28 can collectively determine pass or fail for all pages included in the variable part 52. In this case, the pre-inspection unit 28 determines that the inspection has passed in a case where all the elements extracted from the variable part 52 as the inspection data match all the elements of the reference data 90. In other words, the pre-inspection unit 28 determines that the inspection has passed in a case where the order in which the elements of the items for which the inspection regions are set in the variable part 52 are arranged matches the order in which the elements are arranged in the reference data 90.

In addition, the pre-inspection unit 28 may perform the determination of the pass or fail for each page included in the variable part 52. In other words, the pre-inspection unit 28 determines that a page in which the elements extracted from the variable part 52 as the inspection data match the elements of the reference data 90 has passed. On the other hand, the pre-inspection unit 28 determines that a page in which the elements extracted from the variable part 52 as the inspection data do not match the elements of the reference data 90 has failed the inspection.

In the printing system 1 of Exemplary Embodiment 2, the inspection using the reference data 90 by the pre-inspection unit 28 is performed, and in a case where the inspection is determined to be passed, the printing apparatus 10 prints the printed material 60 based on the print data 50.

In the printing system 1, after the printing of the printed material 60 by the printing apparatus 10, the inspection device 40 inspects the printed material 60 using the reference data 90 and the scan data obtained by scanning the printed material 60. In addition, the inspection device 40 uses the reference data 90 as the correct data instead of the inspection data in Exemplary Embodiment 1 to inspect the printed material 60.

Here, as described in Exemplary Embodiment 1, in a case where the order in which the elements are arranged in the reference data 90 used as the correct data is different from the order in the variable part 52 of the print data 50, the inspection of the printed material 60 may not be accurately performed. Additionally, even in a case where the printed material 60 is printed correctly based on the print data 50, the character string or the like acquired by decoding the scan data of the printed material 60 may not match the elements of the reference data 90, and the printed material 60 may be determined to have failed the inspection.

Contrary to this, in the present exemplary embodiment, in the pre-inspection by the pre-inspection unit 28, in a case where the elements extracted from the variable part 52 as the inspection data match the elements of the reference data 90, the printed material 60 is printed by the printing apparatus 10. Accordingly, in the printing system 1, the inspection device 40 is prevented from determining the printed material 60 to have failed the inspection even in a case where the printed material 60 is printed correctly based on the print data 50, and the inspection of the printed material 60 can be performed more accurately.

Although the exemplary embodiments of the present invention have been described above, the technical scope of the present invention is not limited to the scope described in the above-described exemplary embodiments. In addition, it is apparent from claims that exemplary embodiments in which various modifications or improvements are added to the above-mentioned exemplary embodiments are also included in the technical scope of the present invention.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present invention can also be applied to a program and a program product.

### <Supplementary Notes>

(((1))) An inspection system comprising:
   a processor,
   wherein the processor is configured to:
      extract, from print data that is used for printing a printed material and that has a variable part of which a content differs for each print unit, variable data representing the content of the variable part; and
      perform inspection related to printing of the print data using the variable data.
(((2))) The inspection system according to (((1))), wherein the processor is configured to:
   perform the inspection by comparing read data obtained by reading the printed material printed by using the print data with the variable data extracted from the print data.
(((3))) The inspection system according to (((1))), wherein the processor is configured to:
   acquire reference data as a reference for the inspection; and
   perform the inspection by comparing the variable data extracted from the print data with the reference data before printing of the printed material using the print data.
(((4))) The inspection system according to (((3))),
   wherein the reference data includes information indicating an order in which the content of the variable part is arranged, and
   the processor is configured to:
      inspect the order in which the content of the variable part is arranged in the print data by comparing the variable data with the reference data.
(((5))) The inspection system according to any one of (((1))) to (((4))), wherein the processor is configured to:
   extract the variable data by a different method depending on a data format of the print data.
(((6))) The inspection system according to (((5))), wherein the processor is configured to:
   extract, as the variable data, an element designated by a user from among elements constituting the print data in a case where the print data is structured data or the print data is text data.
(((7))) The inspection system according to (((6))), wherein the processor is configured to:
   receive designation of the element by the user for one print unit in the print data; and
   extract an element corresponding to the element designated by the user for another print unit as the variable data for the other print unit.
(((8))) The inspection system according to (((5))), wherein the processor is configured to:
   extract, in a case where a drawing method used for printing the print data is assigned to an element constituting the print data, the element to which a drawing method designated by a user is assigned, as the variable data.
(((9))) A program causing a computer to implement:
   a function of extracting, from print data for printing a printed material, the print data having a variable part of which a content differs for each print unit, variable data representing the content of the variable part; and
   a function of performing inspection related to printing of the print data using the variable data.

With the inspection system according to (((1))), it is possible to perform the inspection more easily compared to a case where the inspection related to printing of the print data is performed without using the variable data representing the content of the variable part extracted from the print data.

With the inspection system according to (((2))), it is possible to inspect the printed material more easily compared to a case where the printed material is inspected by using data input separately from the variable data.

With the inspection system according to (((3))), it is possible to inspect the content of the variable part printed on the printed material before the printing of the printed material.

With the inspection system according to (((4))), it is possible to suppress the printing of the printed material in a state where the order in which the content of the variable part is arranged is incorrect, compared to a case where the inspection using the variable data is not performed before the printing of the printed material.

With the inspection system according to (((5))), it is possible to extract the variable data even in a case where the data format of the print data is different.

With the inspection system according to (((6))), the user can designate the element to be extracted as the variable data.

With the inspection system according to (((7))), it is possible to extract the element of the other print unit as the variable data even in a case where the user does not designate the element for the other print unit.

With the inspection system according to (((8))), even in a case where the user does not designate the element, the element to which the drawing method is assigned can be extracted as variable data.

With the program according to (((9))), it is possible to perform the inspection more easily compared to a case where the inspection related to printing of the print data is performed without using the variable data representing the content of the variable part extracted from the print data.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: printing apparatus
20, 30: server device
21: print instruction reception unit
22: image processing unit
23: inspection region setting unit
24: inspection data generation unit
25: output unit
26: display control unit
40: inspection device
41: inspection data acquisition unit
42: scan data acquisition unit
43: inspection unit
44: inspection result transmission unit
50: print data
51: fixed part
52: variable part
60: printed material
100: printing system

## Claims

1. An inspection system comprising:
a processor,
wherein the processor is configured to:
extract, from print data that is used for printing a printed material and that has a variable part of which a content differs for each print unit, variable data representing the content of the variable part; and
perform inspection related to printing of the print data using the variable data.

2. The inspection system according to claim 1, wherein the processor is configured to:
perform the inspection by comparing read data obtained by reading the printed material printed by using the print data with the variable data extracted from the print data.

3. The inspection system according to claim 1, wherein the processor is configured to:
acquire reference data as a reference for the inspection; and
perform the inspection by comparing the variable data extracted from the print data with the reference data before printing of the printed material using the print data.

4. The inspection system according to claim 3,
wherein the reference data includes information indicating an order in which the content of the variable part is arranged, and
the processor is configured to:
inspect the order in which the content of the variable part is arranged in the print data by comparing the variable data with the reference data.

5. The inspection system according to any one of claims 1 to 4, wherein the processor is configured to:
extract the variable data by a different method depending on a data format of the print data.

6. The inspection system according to claim 5, wherein the processor is configured to:
extract, as the variable data, an element designated by a user from among elements constituting the print data in a case where the print data is structured data or the print data is text data.

7. The inspection system according to claim 6, wherein the processor is configured to:
receive designation of the element by the user for one print unit in the print data; and
extract an element corresponding to the element designated by the user for another print unit as the variable data for the other print unit.

8. The inspection system according to claim 5, wherein the processor is configured to:
extract, in a case where a drawing method used for printing the print data is assigned to an element constituting the print data, the element to which a drawing method designated by a user is assigned, as the variable data.

9. A program causing a computer to implement:
a function of extracting, from print data for printing a printed material, the print data having a variable part of which a content differs for each print unit, variable data representing the content of the variable part; and
a function of performing inspection related to printing of the print data using the variable data.

10. An inspection method comprising:
extracting, from print data for printing a printed material, the print data having a variable part of which a content differs for each print unit, variable data representing the content of the variable part; and
performing inspection related to printing of the print data using the variable data.
